# EUROPEAN PATENT APPLICATION

(11) **EP 4 593 003 A1**
(43) Date of publication of application: **30.07.2025**
(21) Application number: 24194152.5
(22) Date of filing: 12.08.2024
(51) Int. Cl.: G10D 13/02, G10D 13/10

(54) **DRUM HANGER AND DRUM SET**

(30) Priority: 13.06.2024 TW 113206153 U
(71) Applicant: Reliance International Corp., Taipei (TW)
(72) Inventor: CHU, Pei-Chi, Taipei (TW); HO, Cheng-Lin, Taipei (TW)
(74) Representative: Botti & Ferrari S.p.A.

(57) **Abstract**

A drum hanger can fix a drum (90) and has a holder (10) and a buffer (20). The holder (10) is mounted on the drum side (93) and has a shaft (12). The buffer (20) is mounted on the holder (10). The shaft (12) is mounted through the buffer (20) and the buffer (20) can rotate with the shaft (12) as an axis. The buffer (20) has multiple sides (21), and distances from the respective sides (21) to the shaft (12) are different from one another. When each side (21) faces toward the drum side (93) respectively, the force of the buffer (20) against the drum side (93) differs. When the buffer (20) does not contact the drum side (93), the drum (90) can shake normally. The greater the force of the buffer (20) against the drum side (93), the smaller the shaking of the drum (90).

## Description

### 1. Field of the Invention

The present invention relates to a drum hanger, especially to a hanger that can adjust the shaking of the drum.

### 2. Description of the Prior Arts

A drum is a percussion instrument that allows the drum head to vibrate by the user striking the drum head, which in turn generates sound resonance inside the drum. In addition, when the user strikes the drum, the drum will shake. When a general drum is struck, it will produce sustain due to resonance, and the shaking of the drum can extend the sustain. However, depending on different styles of music or different habits of players, sometimes the player does not want the drum to produce sustain when playing, or the player does not want the drum to shake. At this time, the player can press a piece of rubber against the side of the drum to stop the drum body from shaking and thus eliminate the sustain.

Among the existing products, the rubber only has two states: against the side of the drum and away from the side of the drum. When the rubber is away from the side of the drum, the drum shakes normally and produces complete sustain. When the rubber is against the side of the drum, it will suppress the shaking of the drum body and reduce the sustain, making the shaking level of the drum be non-adjustable. However, different music styles require different levels of sustain. Directly pressing the rubber against the side of the drum makes it impossible to adjust the shaking of the drum, which limits the musical styles that the player can perform.

To overcome the shortcomings, the present invention provides a drum hanger and a drum set to mitigate or obviate the aforementioned problems.

The main objective of the present invention is to provide a drum hanger that is configured to fix a drum on a drum stand and can be attached to or separated from the drum.

The drum hanger has a holder and a buffer. The holder is configured to be securely mounted on a drum side of the drum and has a shaft. The buffer is mounted on the holder and the shaft is mounted through the buffer. The buffer can rotate about the shaft as an axis and has multiple sides. Distances from the sides respectively to the shaft are different from one another. The buffer can selectively face the drum side with the sides.

The advantage of the present invention is that the distances from the sides of the buffer to the shaft are different from one another. Therefore, when each side faces toward the drum side, the force of the buffer pressing against the drum side is different. If the buffer does not contact the drum side, the drum can sway normally and produce complete sustain. The greater the force of the buffer against the drum side, the smaller the shaking of the drum, which can weaken the sustain or even eliminate the sustain. Therefore, the user can rotate the buffer around the shaft as the axis, to control the distance between the buffer and the drum side, thereby adjusting the shaking of the drum to produce different sustain levels for different music styles.

Other objectives, advantages and novel features of the invention will become more apparent from the following detailed description when taken in conjunction with the accompanying drawings.

### In the drawings:

Fig. 1 is a perspective view of a drum hanger in accordance with the present invention mounted on a drum;
Fig. 2 is an exploded view of the drum hanger in Fig. 1;
Fig. 3 is a sectional view of the drum hanger in Fig. 1;
Fig. 4 is an enlarged view of the drum hanger in the first sustain control stage;
Fig. 5 is an enlarged view of the drum hanger in the second sustain control stage;
Fig. 6 is an enlarged view of the drum hanger in the third sustain control stage;
Fig. 7 is a front view of the drum in the second sustain control stage placed on a flat surface;
Fig. 8 is a front view of the drum in the second sustain control stage placed on a drum stand; and
Fig. 9 is a front view of the drum in the first sustain control stage placed on the drum stand.

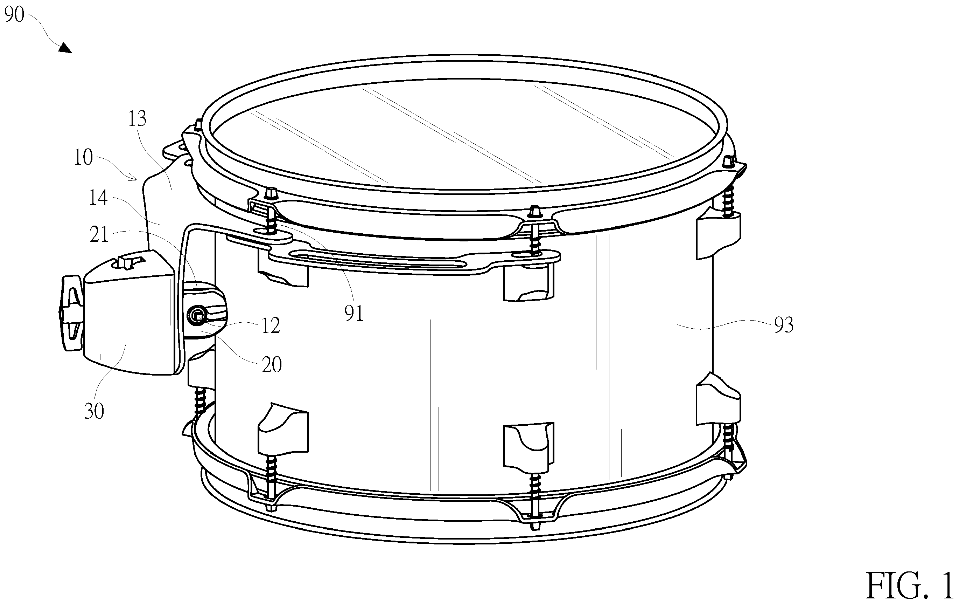

With reference to Fig. 1 to Fig. 3, a drum hanger in accordance with the present invention is configured to fix a drum 90 on a drum stand 92. The drum hanger comprises a holder 10, a buffer 20 and a locking unit 30.

The holder 10 is configured to be securely mounted on a drum side 93 of the drum 90. In this embodiment, the holder 10 comprises an extending unit 11, a shaft 12, a first connecting part 13 and a second connecting part 14. The first connecting part 13 is configured to connect to the drum 90, and the second connecting part 14 is configured to connect to the drum stand 92. Precisely, multiple screws 91 are mounted around the drum 90, and the screws 91 are configured to loosen or tighten the drum head. Two of the screws 91 are mounted through the first connecting part 13 of the holder 10 and connect the holder 10 and the drum 90. There is an angle between the first connecting part 13 and the second connecting part 14. In this embodiment, the angle is 90 degrees such that the holder 10 is L-shaped. The first connecting part 13 is parallel to the drum head of the drum 90, and the second connecting part 14 is parallel to the drum side 93. Precisely, in this embodiment, the first connecting part 13 and the second connecting part 14 are formed by bending one piece, but it is not limited thereto. In another embodiment, the angle is not limited to 90 degrees, and the angle can be between 0 degrees and 180 degrees. The shape of the holder 10 is not limited to an L shape, and can also be arc-shaped or other shapes.

The extending unit 11 protrudes from the second connecting part 14 and extends between the first connecting part 13 and the second connecting part 14. In other words, the extending unit 11 extends to the drum side 93. The shaft 12 is mounted on an end of the extending unit 11 close to the drum side 93, and an axial direction of the shaft 12 is perpendicular to an extending direction of the extending unit 11. In this embodiment, the extending unit 11 is securely mounted on the second connecting part 14 with a bolt, but it is not limited thereto. In another embodiment, the extending unit 11 can be fixed on the second connecting part 14 by riveting, welding or other methods.

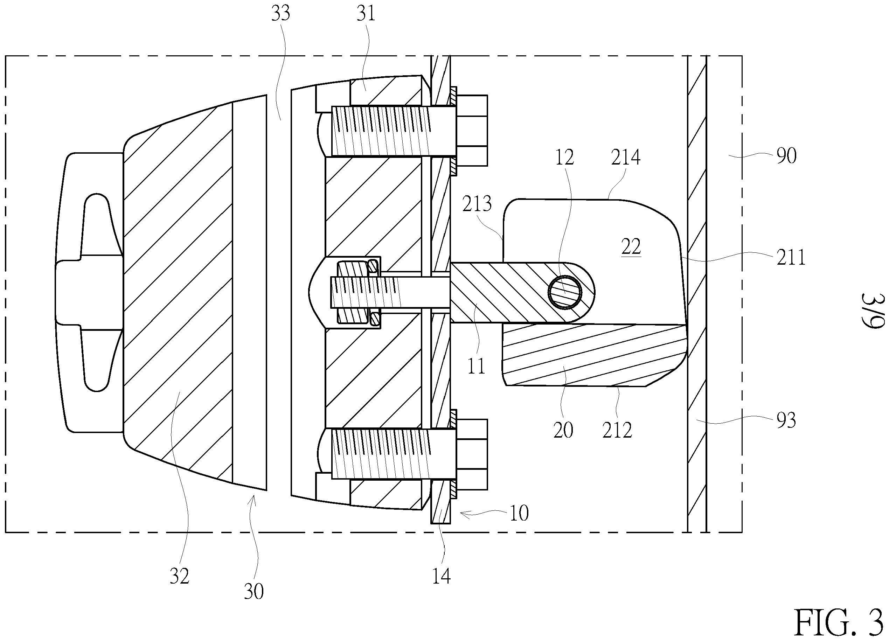

With reference to Fig. 3 to Fig. 6, the buffer 20 is mounted on the extending unit 11 of the holder 10, and the shaft 12 is mounted through the buffer 20. The buffer 20 can rotate with the shaft 12 as an axis. The buffer 20 comprises multiple sides 21 and a groove 22. In this embodiment, the buffer 20 comprises four sides 21. In other words, the sides 21 can include a first side 211, a second side 212, a third side 213 and a fourth side 214. When the buffer 20 rotates with the shaft 12 as the axis, the first side 211, the second side 212 or the third side 213 can be directed away from the second connecting part 14 as required, that is, toward the drum side 93 of the drum 90.

In this embodiment, the first side 211 and the third side 213 are opposite to each other, and the second side 212 and the fourth side 214 are opposite to each other. The distances from the sides 21 to the shaft 12 are different from one another. The distance between the first side 211 and the shaft 12 is the furthest. Therefore, when the first side 211 faces away from the second connecting part 14 and toward the drum side 93, the first side 211 keeps pressing the drum side 93. The distance between the second side 212 and the shaft 12 is smaller than the distance between the first side 211 and the shaft 12. Therefore, when the second side 212 faces away from the second connecting part 14 and toward the drum side 93, the second side 212 can be attached to or separated from the drum side 93. The distance between the third side 213 and the shaft 12 is smaller than the distance between the second side 212 and the shaft 12. Therefore, when the third side 213 faces away from the second connecting part 14 and toward the drum side 93, the third side 213 keeps separated from the drum side 93.

In addition, in this embodiment, the first side 211 is an inclined surface, so the first side 211 and the third side 213 are not parallel to each other. Precisely, when the third side 213 faces away from the second connecting part 14 and toward the drum side 93, the first side 211 faces toward the second connecting part 14 of the holder 10, and an upper edge 2111 of the first side 211 is closer to the holder 10 than a lower edge 2112 of the first side 211. Therefore, the inclined surface makes an angle between the first side 211 and the second connecting part 14 of the holder 10 ranges from 3 degrees to 5 degrees. When the first side 211 faces toward the drum side 93, the inclined surface can keep the first side 211 attached to and pressing against the drum side 93.

In another embodiment, the buffer 20 can comprise other amount of the sides 21, and the distance from each one of the sides 21 to the shaft 12 can be set as required. Therefore, when each side 21 faces the drum side 93, the distance between each side 21 and the drum side 93 or the force pressing against the drum side 93 differs.

In this embodiment, an opening of the groove 22 extends from the first side 211 to the third side 213 and passes through the fourth side 214. In other words, the groove 22 does not pass through the second side 212. The extending unit 11 of the holder 10 extends into the groove 22, and the shaft 12 is mounted through two side walls of the groove 22. Therefore, when the buffer 20 rotates with the shaft 12 as the axis, the groove 22 prevents the buffer 20 from being blocked by the extending unit 11. In another embodiment, the buffer 20 may not comprise the groove 22. Precisely, the extending unit 11 of the holder 10 is mounted on the outside of the buffer 20, such that when the buffer 20 rotates with the shaft 12 as the axis, the buffer 20 will not be blocked by the extending unit 11.

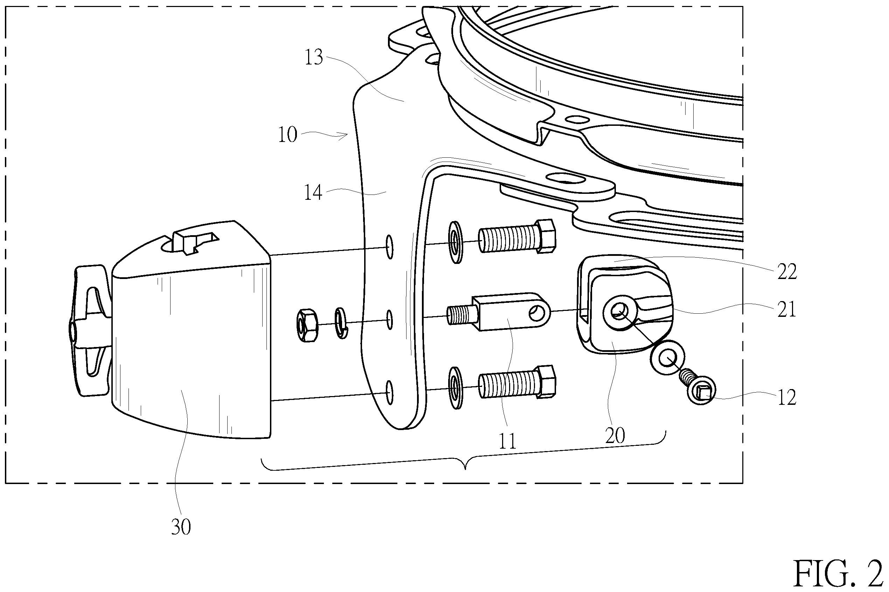

With reference to Fig. 2, Fig. 3, Fig. 7, Fig. 8, and Fig. 9, the locking unit 30 is mounted on a side of the second connecting part 14 of the holder 10 away from the drum side 93 and configured to fix the drum 90 on the drum stand 92. In this embodiment, the locking unit 30 comprises a first part 31, a second part 32, and a gap 33. The first part 31 is fixed on the holder 10 with screws, and the second part can be close to or away from the first part 31. The gap 33 is formed between the first part 31 and the second part 32. The drum stand 92 can be mounted between the first part 31 and the second part 32 of the locking unit 30, that is, the drum stand 92 can be mounted through the gap 33. Precisely, when the second part 32 is close to the first part 31, the drum stand 92 is clamped between the first part 31 and the second part 32, such that the drum 90 is fixed on the drum stand 92. When the second part 32 is away from the first part 31, the drum stand 92 is separated from the gap 33 between the first part 31 and the second part 32, such that the drum 90 is separated from the drum stand 92. In another embodiment, the locking unit 30 can be integrally formed with the holder 10, but it is not limited thereto.

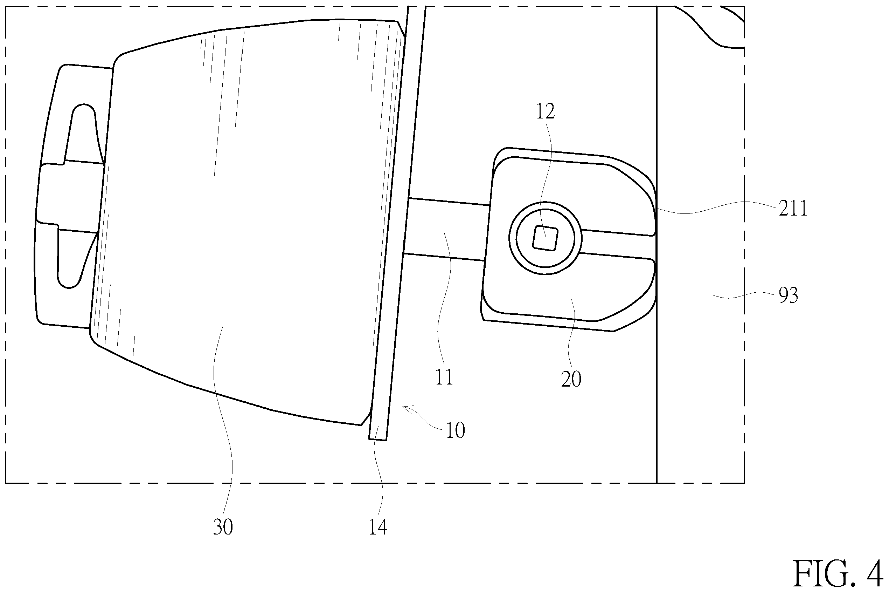

When the buffer 20 of the drum hanger is separated from the drum side 93 of the drum 90, the drum 90 can sway normally when struck, and the sustain produced by the drum 90 can be extended. When the buffer 20 of the drum hanger is attached to the drum side 93 of the drum 90, the shaking of the drum 90 is suppressed, and the effect of suppressing or eliminating sustain can be achieved. In this embodiment, the first side 211, the second side 212 and the third side 213 can face the drum side 93 of the drum 90 respectively (as shown in Fig. 4 to Fig. 6), the distances between each of the three sides 21 and the drum side 93 or the forces pressing against the drum side 93 are different, thereby achieving three stages of sustain control.

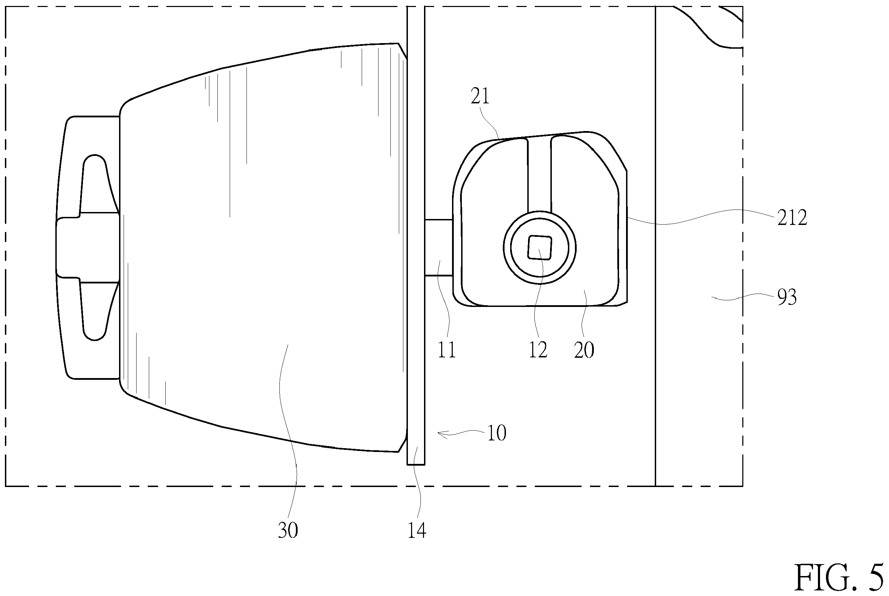

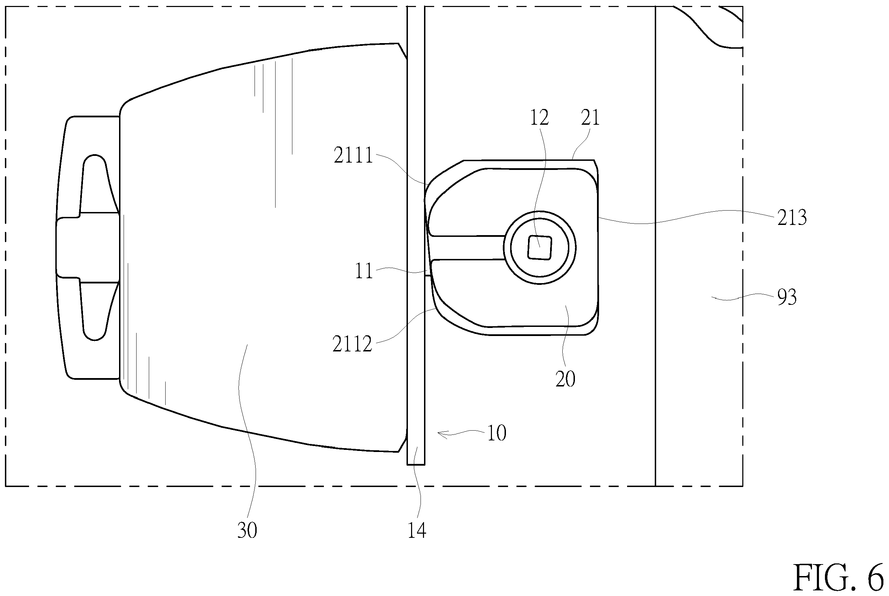

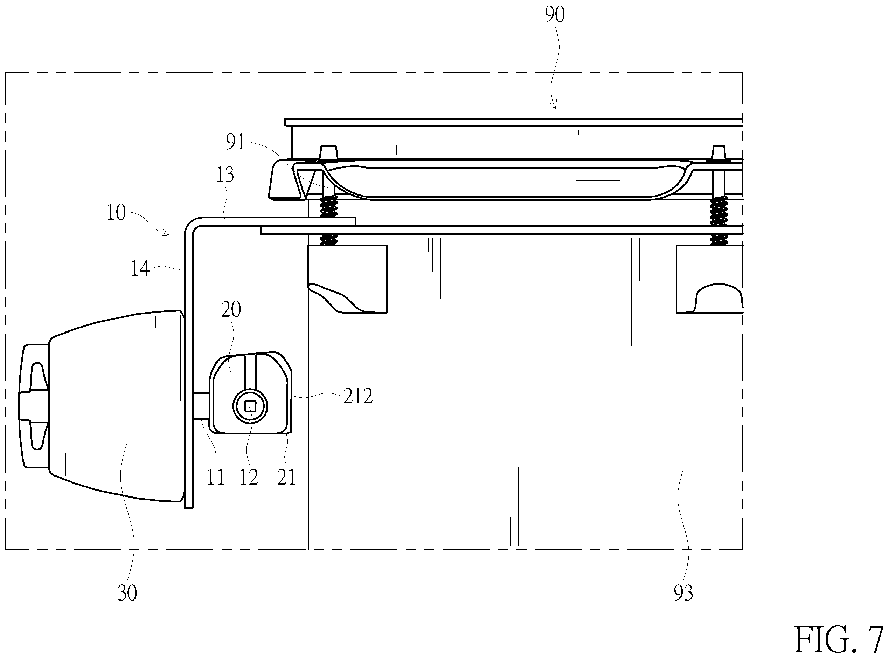

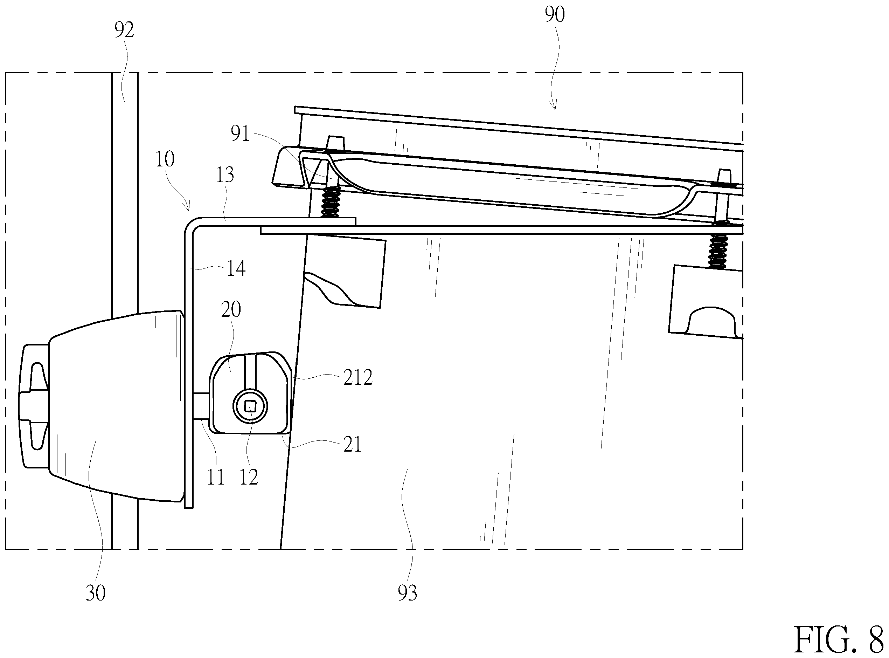

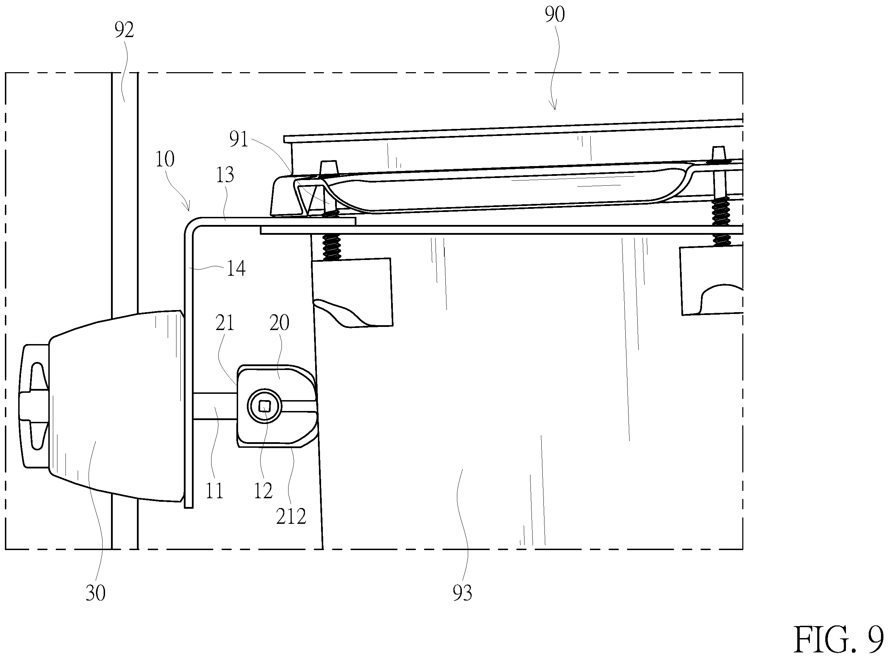

When the drum hanger is in the first sustain control stage, the first side 211 faces toward the drum side 93 of the drum 90 and keeps pressing against the drum side 93 (as shown in Fig. 4). When the drum 90 is mounted on the drum stand 92 (as shown in Fig. 9), the pressing force of the first side 211 against the drum side 93 prevents the drum 90 from tilting due to gravity. Therefore, due to the force of the first side 211 and the drum side 93, the buffer 20 can fix the drum 90 and prevent the drum 90 from shaking when it is struck, so as to achieve the effect of eliminating the sustain. When the drum hanger is in the second sustain control stage, the second side 212 faces toward the drum side 93 of the drum 90 and can be attached to or separated from the drum side 93 (as shown in Fig. 5). Precisely, when the drum 90 is placed on a flat surface (as shown in Fig. 7), the second side 212 remains separated from the drum side 93, allowing the drum 90 to sway normally. When the drum 90 is mounted on the drum stand 92 (as shown in Fig. 8), the drum 90 tilts due to gravity, causing the drum side 93 to abut the second side 212. Therefore, the buffer 20 can suppress the shaking of the drum 90, so as to achieve the effect of weakening the sustain. When the drum hanger is in the third sustain control stage, the third side 213 faces toward the drum side 93 of the drum 90 and remains separated from the drum side 93 (as shown in Fig. 6). Therefore, the drum 90 can sway normally when struck, so as to achieve the effect of normal sustain.

The advantage of the present invention is that the distances from the sides 21 of the buffer 20 to the shaft 12 are different from one another. Therefore, when each side 21 faces toward the drum side 93, the force of the buffer 20 pressing against the drum side 93 is different. If the buffer 20 does not contact the drum side 93, the drum 90 can sway normally and produce complete sustain. The greater the force of the buffer 20 against the drum side 93, the smaller the shaking of the drum 90, which can weaken the sustain or even eliminate the sustain. Therefore, the user can rotate the buffer 20 around the shaft 12 as the axis, to control the distance between the buffer 20 and the drum side 93, thereby adjusting the shaking of the drum 90 to produce different sustain levels for different music styles.

## Claims

1. A drum hanger configured to fix a drum (90) and comprising:
a holder (10) configured to be securely mounted on a drum side (93) of the drum (90) and comprising a shaft (12); and
a buffer (20) mounted on the holder (10) and the shaft (12) mounted through the buffer (20); the buffer (20) being rotatable about the shaft (12) as an axis; the buffer (20) comprising multiple sides (21); distances from the sides (21) respectively to the shaft (12) being different from one another; the buffer (20) selectively facing the drum side (93) with one of the sides (21).

2. The drum hanger as claimed in claim 1, wherein the sides (21) of the buffer (20) include:
a first side (211); when the first side (211) faces the drum side (93), the first side (211) keeping pressing against the drum side (93);
a second side (212) being adjacent to the first side (211); a distance between the second side (212) and the shaft (12) being less than a distance between the first side (211) and the shaft (12); and
a third side (213) being opposite to the first side (211); a distance between the third side (213) and the shaft (12) being less than the distance between the second side (212) and the shaft (12).

3. The drum hanger as claimed in claim 2, wherein the first side (211) and the third side (213) are non-parallel to each other.

4. The drum hanger as claimed in claim 3, wherein an angle between the first side (211) and the third side (213) ranges from 3 degrees to 5 degrees.

5. The drum hanger as claimed in claim 2, wherein:
the sides (21) include:
a fourth side (214) being opposite to the second side (212);
the buffer (20) comprises:
a groove (22); an opening of the groove (22) extending from the first side (211) to the third side (213) through the fourth side (214);
the holder (10) comprises:
an extending unit (11) extending into the groove (22); the shaft (12) mounted on the extending unit (11) and through two side walls of the groove (22).

6. The drum hanger as any one of claimed from claim 1 to claim 4, wherein the holder (10) comprises a first connecting part (13) and a second connecting part (14); an angle formed between the first connecting part (13) and the second connecting part (14); the buffer (20) protruding from the second connecting part (14).

7. The drum hanger as claimed in claim 5, wherein the holder (10) comprises a first connecting part (13) and a second connecting part (14); an angle formed between the first connecting part (13) and the second connecting part (14); the extending unit (11) protruding from the second connecting part (14).

8. The drum hanger as claimed in claim 7, wherein the first connecting part (13) and the second connecting part (14) form an L-shape; the first connecting part (13) being parallel to a drum (90) head of the drum (90), and the second connecting part (14) being parallel to the drum side (93).

9. The drum hanger as claimed in claim 8, wherein the drum hanger comprises a locking unit (30) mounted on a side of the holder (10) away from the buffer (20).

10. A drum (90) set comprising:
a drum (90);
the drum hanger as any one of claimed from claim 1 to claim 9 mounted on the drum (90).

## Amended claims

### Amended claims in accordance with Rule 137(2) EPC.

1. A drum hanger configured to fix a drum (90) and comprising:
a holder (10) configured to be securely mounted on a drum side (93) of the drum (90) and comprising a shaft (12); and
a buffer (20) mounted on the holder (10) and the shaft (12) mounted through the buffer (20); the drum hanger being **characterized by**
the buffer (20) being rotatable about the shaft (12) as an axis; the buffer (20) comprising multiple sides (21); distances from the sides (21) respectively to the shaft (12) being different from one another; the buffer (20) selectively facing the drum side (93) with one of the sides (21); the buffer (20) being capable of fixing the drum (90) and preventing the drum (90) from shaking.

2. The drum hanger as claimed in claim 1, wherein the sides (21) of the buffer (20) include:
a first side (211); when the first side (211) faces the drum side (93), the first side (211) keeping pressing against the drum side (93);
a second side (212) being adjacent to the first side (211); a distance between the second side (212) and the shaft (12) being less than a distance between the first side (211) and the shaft (12); and
a third side (213) being opposite to the first side (211); a distance between the third side (213) and the shaft (12) being less than the distance between the second side (212) and the shaft (12).

3. The drum hanger as claimed in claim 2, wherein the first side (211) and the third side (213) are non-parallel to each other.

4. The drum hanger as claimed in claim 3, wherein an angle between the first side (211) and the third side (213) ranges from 3 degrees to 5 degrees.

5. The drum hanger as claimed in claim 2, wherein:
the sides (21) include:
a fourth side (214) being opposite to the second side (212);
the buffer (20) comprises:
a groove (22); an opening of the groove (22) extending from the first side (211) to the third side (213) through the fourth side (214);
the holder (10) comprises:
an extending unit (11) extending into the groove (22); the shaft (12) mounted on the extending unit (11) and through two side walls of the groove (22).

6. The drum hanger as claimed in any one of claim 1 to claim 4, wherein the holder (10) comprises a first connecting part (13) and a second connecting part (14); an angle formed between the first connecting part (13) and the second connecting part (14); the buffer (20) protruding from the second connecting part (14).

7. The drum hanger as claimed in claim 5, wherein the holder (10) comprises a first connecting part (13) and a second connecting part (14); an angle formed between the first connecting part (13) and the second connecting part (14); the extending unit (11) protruding from the second connecting part (14).

8. The drum hanger as claimed in claim 7, wherein the first connecting part (13) and the second connecting part (14) form an L-shape; the first connecting part (13) being parallel to a drum (90) head of the drum (90), and the second connecting part (14) being parallel to the drum side (93).

9. The drum hanger as claimed in claim 8, wherein the drum hanger comprises a locking unit (30) mounted on a side of the holder (10) away from the buffer (20).

10. A drum (90) set comprising:
a drum (90);
the drum hanger as claimed in any one of claim 1 to claim 9 mounted on the drum (90).
